# EUROPEAN PATENT APPLICATION

(11) **EP 4 663 264 A1**
(43) Date of publication of application: **17.12.2025**
(21) Application number: 25177084.8
(22) Date of filing: 16.05.2025
(51) Int. Cl.: A63F 13/52, A63F 13/67, G06T 15/00

(54) **SYSTEM AND METHOD FOR SELECTING GRAPHICS SHADERS**

(30) Priority: 14.06.2024 GB 202408561
(71) Applicant: Sony Interactive Entertainment Inc., Tokyo 108-0075 (JP)
(72) Inventor: CERRATO, Maurizio, London, W1F 7LP (GB); SMITH, Alexei Ashton Derek, London, W1F 7LP (GB); HAFFIE, Kylan, London, W1F 7LP (GB)
(74) Representative: Gill Jennings & Every LLP

(57) **Abstract**

In this application, there is provided a computer-implemented method of processing graphics data in a video gaming system, the video gaming system comprising a graphics processing unit (GPU), and the method comprising: receiving gameplay event data, the gameplay event data comprising data associated with current and/or antecedent gameplay events; predicting, based on the received data, a first gameplay event, the first gameplay event comprising an expected future gameplay event; determining, based on the predicted first gameplay event, a first shader usable by the GPU for processing graphics data associated with the first gameplay event; and preloading the first shader into a memory usable by the GPU for processing graphics data associated with the first gameplay event. Related computer programs and video gaming systems therefor are also provided herein.

## Description

### TECHNICAL FIELD OF THE INVENTION

The invention is directed to methods and systems for rendering graphics data. More specifically it relates to method for determining required graphics shaders for use in computer graphics processing by a video gaming system.

### BACKGROUND TO THE INVENTION

Continuous advancements in hardware, software, and rendering techniques have driven the evolution of modern video games, resulting in increasingly complex and realistic graphics. These enhancements allow developers to craft immersive and visually captivating gaming experiences. However, they also bring about various challenges in the graphics processing pipeline.

A typical video game played out on a 2D screen requires a large variety of different types of graphical elements and rendering techniques to come to life, where the rendering of each element potentially requires a number of stages. The stages required to take a 3D model of a scene, render a 2D representation projected onto the viewing screen and then apply appropriate colour, lighting and visual effects together form the graphics rendering pipeline. In state of the art graphics processing systems, a large number of different programs, or "shaders", are required to be run by the GPU to achieve the multitude of rendering tasks within the graphics processing pipeline.

Shader programs run on the GPU and are responsible for many of these different rendering stages within the graphics rendering pipeline. The huge range of different rendering functions required poses challenges in how best to implement the shaders required to provide the range of processing techniques. In one approach large multipurpose shaders can be used, which are able to render lots of different types of data. However, these types of large shader are typically slow to run, particularly when they involve dynamic branches, and they do not make most efficient use of the capacity of the GPU. The preference is therefore generally towards a larger number of smaller task-specific shaders, that are each responsible for a narrower range of processing tasks, such as rendering a particular object, material, lighting or post processing effect. This creates a challenge in that a large number of specific shaders must be ready and usable for the GPU for any one scene within the video game. There is insufficient memory to pre-prepare every possible shader that could be required during gameplay and so shaders are often loaded as and when required.

In the case of a personal computer (PC), shaders are typically compiled during initialisation of a video game as any given shader for a particular video game must be recompiled for each graphics card on which the program is to run. This can cause a delay while the shader is compiled and loaded which results in noticeable issues during gameplay. In the case of a gaming console, all shaders are often compiled prior to runtime (i.e. during development, forming part of the game data stored on disc) and then loaded during gameplay (e.g. while a new map is being loaded). This avoids some of the impact on graphics performance during gameplay experienced by PCs, but limits the usable shaders to those pre-prepared before gameplay starts. Even with pre-compiled shaders, there is a performance impact as the shaders must be loaded into the memory usable by the GPU, causing a delay and detrimental effect on performance and user experience.

It is therefore an object of the invention to overcome the aforementioned issues and provide greater flexibility in the deployment of shaders, thereby allowing a greater range of task-specific shaders to be used while minimising detrimental effects on performance.

### SUMMARY OF THE INVENTION

According to a first aspect of the invention, there is provided a computer-implemented method of processing graphics data in a video gaming system, the video gaming system comprising a graphics processing unit (GPU), and the method comprising: receiving gameplay event data, the gameplay event data comprising data associated with current and/or antecedent gameplay events; predicting, based on the received data, a first gameplay event, the first gameplay event comprising an expected future gameplay event; determining, based on the predicted first gameplay event, a first shader usable by the GPU for processing graphics data associated with the first gameplay event; and preloading the first shader into a memory usable by the GPU for processing graphics data associated with the first gameplay event.

In this way, a delay in processing, corresponding to a latency perceptible by a user, is reduced when the GPU is able to pre-empt graphics processing associated with a predicted upcoming gameplay event using the preloaded required shader, rather than loading the shader as and when said gameplay event occurs/is occurring. In the prior art, if a required shader is not present in a GPU-accessible memory, there may be a latency, lagging or other performance issues while the shader is loaded and thereby made available for completing the required graphics processing tasks, whereas in the invention frames can be pre-processed prior to being deployed on screen to mitigate such lagging.

Herein, graphics data is understood to mean the large number and variety of different graphical elements such as different virtual objects, materials, lighting effects, and background scenery which may be visually present in a scene of a video game. Often, these elements require different rendering processes to be applied and, in order to provide these rendering processes, the graphics rendering pipeline requires a specialised shader to be applied to render each type of element. For example, a video gaming system may utilise a metal shader for rendering metal objects, a skin shader for rendering the skin (i.e. clothing, appearance, accessories, stature etc.) of in-game characters, a ground shader for rendering the ground, a water shader for rendering bodies of water, glow shaders for rendering special glow effects, light emitter shaders for shading street lamps, and so on.

Graphics data may refer to data files stored in a memory which are available for processing by the GPU and subsequent rendering i.e. graphics data referring to visual content in a raw file format. These data files are typically raw media files and may be stored in a variety of file formats in a variety of storage media; such file formats include, but are not limited to png, jpg, and tga. However, graphics data is not limited herein and may also refer to rendered visual content which is readily discernible by a user e.g. on screen or via wearable headgear.

Herein, a gameplay event is understood to mean an in-game event for which graphics processing is required; such events may be visually discernible by a user playing the video game. Each gameplay event is associated with and viewable to the user by means of the graphics data. The gameplay typically comprises a sequence of gameplay events rendered for viewing by the user; these sequences of gameplay events may be referred to as scenes. Generally, the gameplay may be understood to mean all aspects of a video game relating to the plot, the rules and objectives, and the overall nature of the user's interaction with the game. For example, in the scenario of a first person shooter (FPS) game, the gameplay may refer to the journey through or objectives sought in the game, or a particular level/map thereof. A gameplay event may then refer to a user avatar taking a particular left or right turn, crossing into a different map, or a non-player character (NPC) reacting to a given action taken by a user avatar. Further examples of a gameplay event may include an occurrence of the player character entering a particular area of the virtual environment; the materialisation of a particular gameplay object, character or material; or the use of a particular action type such as a battle dialogue or cutscene.

Herein, gameplay event data is understood to mean data associated with gameplay events of the past, present and future. Past occurrences may be referred to as past or antecedent gameplay events; present occurrences may be referred to as present or current gameplay events; and future occurrences may be referred to as future or subsequent gameplay events. For example, in the scenario of a multiple online battle area (MOBA) game, an antecedent or a current gameplay event may be the occurrence of a battle between two users in a particular area of the map. Gameplay event data is therefore the information whereby the GPU is aware that such a gameplay event has occurred or is concurrently occurring; it may take the form of the graphics data required to render the graphics associated with said event, or other forms of data such as audio/haptic data, bit flags, memory pointers, data in raw media files, other markers, executed or executable program instructions etc. Such gameplay event data may be used in the prediction of expected future gameplay events according to the methods disclosed herein.

A future gameplay event may also be associated with a calculated or estimated probability, expectation, or likelihood of occurrence. The likelihood of occurrence may be calculated using an algorithm, wherein the algorithm comprises one or more of a confidence estimation; machine learning algorithm; a deep learning algorithm; and other statistical analysis methods. The predictive abilities of the invention are thereby improved using these techniques.

Herein, a GPU is understood to mean a specialised electronic circuit designed to manipulate and alter memory to realise the creation of images (in the form of frames) in a frame buffer intended for outputting to a display device. GPUs are highly optimised for parallel processing tasks such that they are adapted for rendering graphics and executing shader programs. A GPU may handle tasks such as configuring shader programs, reading/writing to memory, vertex processing, geometry transformation, rasterisation, and pixel shading tasks, all of which are fundamental stages of the graphics pipeline. The person skilled in the art will appreciate that may further graphics-related tasks are achievable by virtue of the GPU.

Herein, a shader or shader program is understood to mean a particular type of program or set of instructions that runs directly on the GPU. Shaders define how objects and surfaces in a scene are rendered and displayed on the screen for users by instructing the GPU on how to manipulate vertices, geometry, primitives and fragments. Shaders enable realistic graphics and visual effects to be applied in scenarios including video games, simulations, and so on. For example, a shader may be configured for rendering a particular graphical object type, material type, lighting condition and/or effect type. Alternatively, a shader may be configured for rendering pluralities of different graphical object types, material types, lighting conditions and/or effect types.

Herein, memory usable by the GPU is understood to mean any one or combination of the various types of memory available to the GPU in a typical gaming system. Such types may include but are not limited to: RAM and/or VRAM (i.e. Video RAM), which are often used by the GPU to store graphics data, gameplay event data, textures, frame buffers, vertex buffers, other rendering attributes, executable/loaded shader programs, and to act as a memory buffer between the GPU and the system RAM; constant memory, which is often used for permanently storing variables which remain constant across multiple shader invocations and multiple integrated development environments; texture memory i.e. a specialised type of memory used to store texture data, such as images or patterns, that is sampled by shader programs during rendering; and 'global' or 'system' memory i.e. the GPU's main memory space, with large capacity and slower access, which stores shader programs prior to being compiled, data buffers, and other resources. Shader source code (e.g. GLSL or HLSL) may also be stored on storage devices such as SSD or HDD. Following compiling or loading, shader programs, graphical data and other files may also be stored in a cache memory.

In a first example of the first aspect, after determining the first shader usable for processing graphics data associated with the first gameplay event, the method further comprises: performing a check to determine whether the first shader is present in the memory usable by the GPU, and preloading the first shader when it is determined that the first shader is not present in the memory usable by the GPU.

In a second example of the first aspect, before preloading the first shader, the method further comprises: compiling the first shader.

In a third example of the first aspect, when the first gameplay event occurs, the method further comprises: rendering, with the preloaded first shader, the graphics data associated with the first gameplay event.

According to the second and third examples of the first aspect, a shader which is expected to be required based on the predicted gameplay event is both compiled and pre-loaded. This is particularly useful where a shader has not yet been compiled but is necessary for a certain graphics processing task associated with a certain gameplay event.

Herein, shader compilation and loading are distinct processes which take place prior to on-screen rendering: compiling a shader converts the human-readable shader source code into executable GPU code specific to the graphics card or hardware etc., while loading a shader involves preparing the compiled shader code for use within the graphics application i.e. the graphics API's context. These steps are typically sequential and are typically required before the GPU can begin executing rendering tasks in accordance with the specified graphics pipeline.

More specifically, shader compilation refers to the process of retrieving, parsing and then translating shader source code (e.g. that written in GLSL or HSL) into a format that is executable by the GPU. The compilation typically involves checking the syntax and semantics of the shader code and generating machine code specific to the target hardware (e.g. a specific graphics card). This process may be performed by the graphics API (e.g. OpenGL or DirectX) when the shader source code is provided thereto. In some examples, the process of retrieving the shader from storage may involve a decompression step, wherein the shader code is converted from a first format into a second format to be translated. The first format may be a space-efficient format, and the second format is translatable and may be the source code format. Once compiled, shader programs may run on a single GPU or in parallel on multiple GPU cores. Shaders are oftentimes not compiled during gameplay as shader compilation can be time-consuming, especially for complex shaders or large video game programs with many shaders. Moreover, embedding shaders directly into the executable can increase the difficulty with which the video game application can be ported to different platforms or graphics APIs, as the shader compilation process can vary between different environments. In the prior art, this step is typically done prior to runtime.

As mentioned, shader loading is a distinct process to compilation. Once the shader code is compiled, the resulting shader program needs to be loaded into the graphics application for use by the GPU in rendering tasks. Loading a shader involves creating a shader object in the graphics API's context and attaching the compiled shader code thereto. In the prior art, this step is done at runtime i.e. when the application initialises or as and when the shader is needed for rendering.

In a fourth example of the first aspect, the gameplay event data further comprises user virtual location data, the user virtual location data comprising data associated with a location of a user in a virtual gaming environment, and the predicting, based on the received data, the first gameplay event optionally comprises predicting a future location of the user in the virtual gaming environment.

In this way, predictions of expected gameplay events can be based on the whereabouts of the user within the virtual gaming environment. For example, such predictions may involve tracking a user and extrapolating their direction of travel, thereby basing the prediction on current and/or historical location data, and thereafter preloading the shader(s) necessary for graphics processing in their future in-game locations. In some examples, other forms of instantaneous data (such as one or more of: current and/or historical speed, acceleration, direction, mass etc.) may be used with or instead of the location data. Other predictions may involve determining that, once a particular map is completed, there is only one subsequent map available to the user or there is one subsequent map to which the user is highly likely to travel, and thereafter preloading the shader(s) necessary for graphics processing in said subsequent map.

Herein, user virtual location data is understood to mean the real or virtual location of a user in a virtual gaming scenario. For example, this location data may include the virtual coordinates of a user avatar on a map of a particular level within the video game; the real coordinates of a user in an augmented reality (AR) gaming scenario; a particular defined area of a virtual map such as a room, building, outdoor space, arena, and so on.

In a fifth example of the first aspect, the gameplay event data further comprises user input data, the user input data comprising data associated with input commands received from a user, and the predicting, based on the received data, the first gameplay event optionally comprises predicting a future input command from the user or a future gameplay decision of the user.

In a sixth example of the first aspect, the gameplay event data further comprises user profile data, the user profile data comprising data associated with a player behaviour profile of a user and/or player behaviour characteristics of the user, and the predicting, based on the received data, the first gameplay event optionally comprises predicting a future input command from the user.

In this way, predictions of expected future gameplay events can be based on user commands, user preferences, and the learned or otherwise known behavioural characteristics of the user associated with how the user tends to play video games or how it is expressed in their player profile(s) that they prefer to play video games. Such data may be collected by the video gaming system during runtime, prior to gameplay, and/or while the user is concurrently playing, and therefrom determine the likely actions and associated expected input commands that the user may take.

Herein, user input data is understood to mean any data which the user inputs or has inputted into the gaming system. This may include data received from a user input device such as a handheld controller, headgear, other wearables, motion sensing equipment, balance board, or any other such device through which the user interacts with the video gaming system and thereby performs actions within the video game. User input data can directly influence gameplay mechanics, character actions, and the overall progression of the user through the game. User input data may further include any interactions made using other input devices such as keyboards, mice, gamepads or touchscreens. User input data can be associated with a wide range of actions, including movement, aiming, attacking, jumping, interacting with objects, selecting menu options, and so on. In real-time games, user input data may be continuously processed by a processor of the CPU (or 'game engine') within the video gaming system to update the game state and provide responsive feedback to the player.

Herein, user profile data is understood to mean the information that characterises a player's preferences, progress, achievements, and (user specific) settings within a game. This data is typically stored persistently (e.g. in a hard drive, solid-state drive, or cloud storage) and is associated with the player's account or profile. It may include details such as the player's username, avatar, progress in the game (e.g. completed levels, unlocked items, and in-game currency), customised settings (e.g. graphics options and keybindings), and any other personalisable preferences. User profile data enhances the gaming experience by providing continuity across gaming sessions and allowing players to tailor their experience to their preferences. User profile data, user input data, or other data pertaining to the personality and/or decision-making behaviour of the user may be used in the prediction of future gameplay decisions made by the user, wherein a gameplay decision may be understood to mean a choice or action made by the player that that affects the gameplay or narrative trajectory of the game or otherwise influences the progression, outcome, or experience of the game. This includes decisions related to character movement, combat strategies, item selection, dialogue choices, quest completion, and any other interactive elements within the game world.

In a seventh example of the first aspect, the determining, based on the predicted first gameplay event, the first shader, further comprises determining the first shader from a plurality of graphics shaders.

According to the seventh example of the first aspect, the GPU is capable of identifying the different shaders stored in GPU-accessible memory which are available for use by the GPU. There are several types of shader usable by the GPU, each responsible for different stages of the rendering pipeline; based on the received data, the GPU is capable of determining the required shader from the set of available shaders of many different types. By way of example, a vertex shader operates on each vertex of a 3D object and is responsible for transforming its position from 3D world coordinates to 2D screen coordinates. It can also perform other operations such as applying transformations, lighting calculations, and passing data to other shaders. A geometry shader operates on entire geometric primitives (i.e. points, lines, triangles etc.) and may generate new primitives, modify existing ones, or discard them altogether. It may also be used by the GPU for tasks such as tessellation. A fragment shader or pixel shader operates on each fragment/pixel generated during the rasterisation process and is responsible for determining the final colour of each pixel based on lighting calculations, textures, material properties, and other factors. Fragment shaders are crucial for achieving realistic lighting effects, shadows, reflections, and more. The person skilled in the art will appreciate there are many other such shaders usable by the GPU for different graphics processing tasks throughout the graphics pipeline.

In an eighth example of the first aspect, the predicting, based on the received data, a first gameplay event, further comprises: calculating, based on the received data, a likelihood of occurrence of N possible future gameplay events. In this way, it is possible to predict, based on the received data, up to N expected future gameplay events, wherein each of the N events is associated with a likelihood of occurrence.

In a ninth example of the first aspect, the method further comprises: determining the first gameplay event as the gameplay event having a greatest likelihood of occurrence of the N gameplay events. In this way, it is possible to determine the first gameplay event from the N events, wherein the first gameplay event comprises the expected future gameplay event having a greatest likelihood of occurrence of the N events.

In a tenth example of the first aspect, the method further comprises: determining a plurality of gameplay events based on the calculated likelihoods of occurrence within the N gameplay events; determining a plurality of shaders required for processing graphics data associated with the plurality of gameplay events; and preloading the plurality of shaders. Optionally, the determining a plurality of gameplay events comprises determining a plurality of gameplay events having a calculated likelihood above a threshold. For example, where the plurality of gameplay events comprises a total of M events, it is thereby possible to determine, based on the M expected future gameplay events, a plurality of graphics shaders usable by the GPU for processing graphics data associated with the M events, wherein the M events are advantageously the M events of the N events having the M greatest likelihoods of occurrence.

In an eleventh example of the first aspect, the determining a plurality of shaders required for processing graphics data associated with the plurality of gameplay events comprises: determining one or more common shaders required across the plurality of gameplay events.

In a twelfth example of the first aspect, the predicting, based on the received data, the first gameplay event further comprises: using the received data as input data into a trained machine learning model, wherein the trained machine learning model is configured to predict, based on the received data, an expected future gameplay event, for example, the first gameplay event.

In an thirteenth example of the first aspect, the training data is captured during gameplay, during developmental testing of the video gaming system, and/or from a user during runtime.

In this way, machine learning is used to predict the appropriate shader for a specific graphics processing task, thereby further optimising the shader selection process in graphics programming. This may involve training a model on a dataset containing pairs of input data (representing given graphics processing tasks) and corresponding output labels (representing the shaders that best suit those tasks according to the model parameters and weightings).

In a fourteenth example of the first aspect, the predicting, based on the received data, a first gameplay event is performed by a hardware acceleration module, wherein the hardware acceleration module is optionally a machine learning hardware acceleration module.

In a fifteenth example of the first aspect, the first shader is preloaded into a cache memory for storage and future use by the GPU.

In a sixteenth example of the first aspect, the preloaded first shader is stored for use by the GPU within a predetermined address space of the cache memory. There is therefore a distinct space - i.e. a predetermined set of memory addresses - in the GPU cache specialised for storing a preloaded, predicted first shader.

In this way, during shader execution, the GPU fetches program instructions and data associated with the shader program from the cache which helps reduce memory access latency and improve shader execution speed. This effect is furthered by defining certain addresses in the cache memory where the GPU can check for a stored first shader determined according to the methods disclosed herein.

Herein, a cache memory is understood to mean a small, high-speed memory unit located on the GPU chip or located so as to be readily accessible by the GPU. Cache memory is typically utilised for temporary storage of frequently accessed graphics data and program instructions, allowing for quicker access compared to fetching the data directly from slower main memory (RAM), cloud storage or other external storage. When a shader program is compiled and loaded onto the GPU, the instructions and data needed for shader execution may be advantageously stored in the GPU's cache memory.

According to the fifteenth and sixteenth examples of the first aspect, the method may be implemented such that no loaded shaders are stored in the cache memory or other GPU usable memory initially (i.e. on initialisation of the GPU or loading of the video game or section of the video game), with the first shaders being loaded into the cache when required based on the predicted gameplay. In particular, when a scene comprising expected gameplay has been predicted according to the methods disclosed herein, the first shader (or first shaders) required for rendering graphical components within the scene are retrieved and loaded. It may also be possible to perform a check to determine whether the first shader has been loaded into the cache and, if not, predicting and preloading the shader according to the methods disclosed herein.

In a seventeenth example of the first aspect, the methods are performed dynamically at runtime and/or during gameplay.

According to a second aspect of the invention, there is provided a non-transitory computer-readable storage medium comprising instructions that when executed by a processor cause the processor to perform the method according to the first aspect and any example thereof.

According to a third aspect of the invention, there is provided a computer program product comprising instructions that when executed by a processor cause the processor to perform the method according to the first aspect and any example thereof.

According to a fourth aspect of the invention, there is provided a video gaming system comprising a processor configured to perform the method according to the first aspect and any example thereof.

### BRIEF DESCRIPTION OF THE DRAWINGS

Preferred embodiments of the invention are hereafter described by way of non-limiting example and with reference to the accompanying drawings, wherein:
Fig. 1 is a flow diagram of a method according to an embodiment of the invention;
Fig. 2 is a flow diagram of a method according to an embodiment of the invention; and
Fig. 3 is a schematic diagram of a video gaming system usable to implement embodiments of the invention.

### DETAILED DESCRIPTION

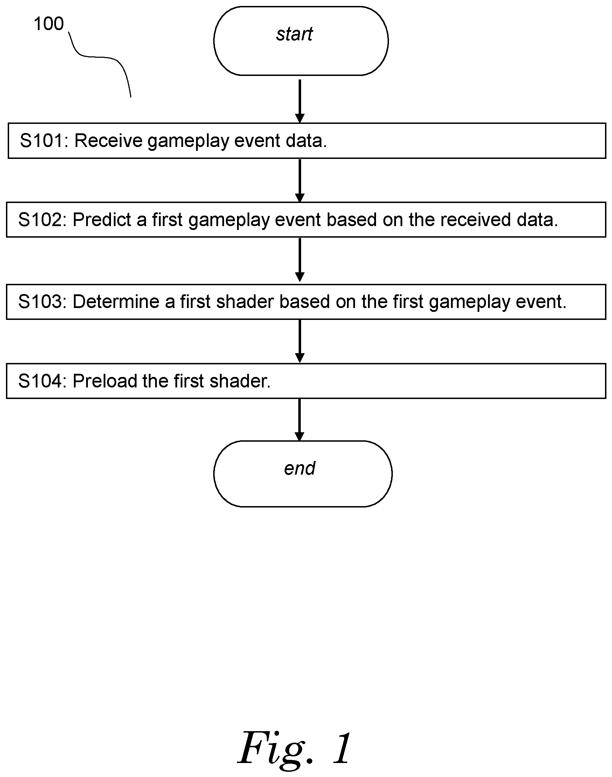

With reference to Fig. 1, there is provided a flow diagram of a method 100 of processing graphics data in a video gaming system according to the invention.

The method 100 of Fig. 1 comprises the steps of: receiving S101 gameplay event data, the gameplay event data comprising data associated with current and/or antecedent gameplay events; predicting S102, based on the received data, a first gameplay event, the first gameplay event comprising an expected future gameplay event; determining S103, based on the predicted first gameplay event, a first shader usable by the GPU for processing graphics data associated with the first gameplay event; and preloading S104 the first shader into a memory usable by the GPU for processing graphics data associated with the predicted first gameplay event.

Rather than having to load all possible shaders required for a particular gameplay sequence ahead of time, or loading when required which can lead to performance issues, the present method involves using the current gameplay status to predict likely future events and load the required shaders ahead of time. This reduces the likelihood of stuttering when the required shaders are not present and must be loaded to render a particular frame. It also reduces the number of shaders that must be saved in a memory usable by the GPU, facilitating performance improvements and allowing the GPU memory to be better utilised. Each step is now described in sequence.

S101: The video gaming system receives gameplay event data. This gameplay event data is associated with the currently occurring sequence of gameplay and may comprise data associated with currently occurring game events or preceding game events. The system may receive said data via an internet connection, via a data port, via reading from a memory, via analysing the gameplay, via direct inputting by a user through, for example, a controller, or via any other means contemplated by a person skilled in the art whereby data is receivable at a video gaming system.

Examples of receivable gameplay event data include user virtual location data, for example the player character's location within the virtual environment; user input data, for example data received from a user input device; user profile data, such as data relating to user behaviour data, for example past gameplay behaviour data; data relating to the outcome of preceding gameplay event, such as a level or a challenge/battle therewithin; NPC related data; user avatar data including health or upgrades; or any other such information whereby the GPU is aware of a gameplay event that has occurred or is concurrently occurring. As such, the receivable gameplay event data are associated with current and/or antecedent gameplay events i.e. associated with present or past occurrences happening or having happened in the game. All exemplary forms of gameplay event data may also be monitored in combination and employed together in order to determine a more accurate prediction of a future gameplay event, or they may be used separately in order to focus on a particular type of gameplay event.

For example, user virtual location data may comprise data relating to the changing location of a user within the virtual environment, for example a direction of travel. It may comprise the virtual maps of a particular game level or the locations within a virtual map through which a user avatar has travelled and/or is travelling, said locations representing the whereabouts of the user in avatar form within the virtual gaming environment. Accordingly, when the user avatar travels through any particular location, map or checkpoint etc. within a level, this may be referred to as a current gameplay event (or antecedent gameplay event once a new location or level etc. has been arrived at), and the data which records or otherwise signifies this event is referred to as gameplay event data. Recording such data over an extended period of time while the user avatar travels through a map may be referred to as tracking the user. In the example of user virtual location data, the location information may be represented by any in-game coordinate system or other spatial vector system known per se in the art. In alternate examples, the user virtual location may be a location of the user in the real world wherein the user is participating in an AR video game.

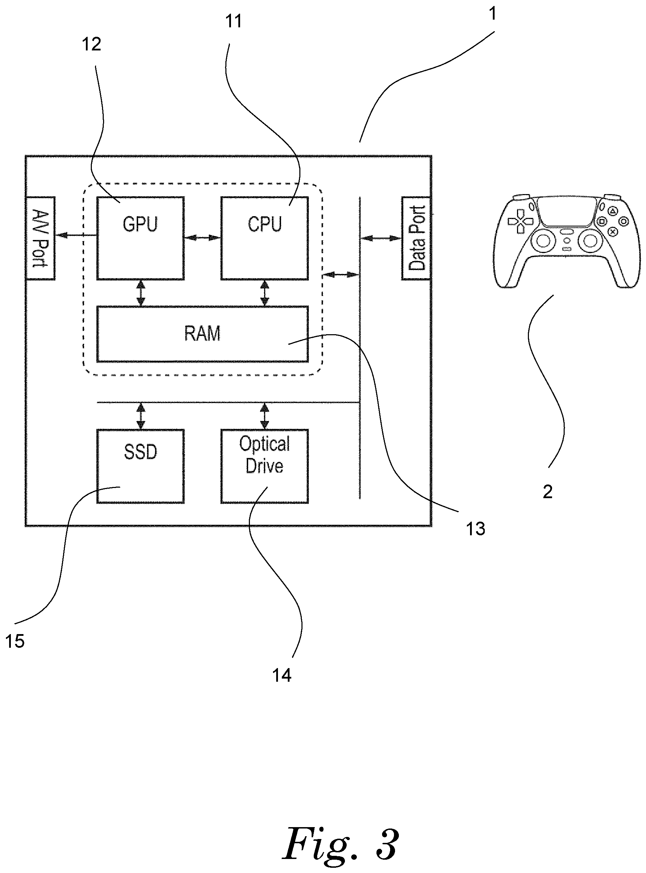

For example, user input data may comprise data which the user is inputting or has inputted into the video gaming system via a handheld controller, headgear, motion sensing equipment, balance board, or any other such device through which the user interacts with the video gaming system and thereby performs actions within the video game. Examples of user inputs include any actions initiated by the user interacting with input devices such as keyboards, mice, gamepads or touchscreens, such as movement, aiming, attacking, jumping, interacting with objects, selecting menu options, and so on. Accordingly, when the user inputs any such data into the system, for example via the data port of Fig. 3, this may be referred to as a current gameplay event (when presently occurring) or antecedent gameplay event (when having had already occurred), and the data itself is referred to as the gameplay event data. In the example of user input data, the input information may be represented by binary arrays, bitmaps, non-binary categories or any other such processor-readable data structures known per se in the art.

For example, user profile data may comprise the stored information that characterises a player's preferences, progress, achievements, and (user specific) settings within a game. A user's historical gameplay data may be stored in a user profile. The user profile may encode various parameters relating to their gameplay style and level of expertise and/or experience. Examples of user profile information include details such as the player's username, avatar, progress in the game (e.g. completed levels, unlocked items), in-game currency, customised settings (e.g. graphics options, keybindings), and any other personalisable preferences. Accordingly, when any of such details are input to the video gaming system, updated, removed, amended etc., this may be referred to as a current gameplay event (or antecedent gameplay event when said data is stored in the video gaming system but the data is not presently changing), and the new or otherwise correct data is referred to as the gameplay event data. In the example of user profile data, the user profile information may be represented by binary arrays, bitmaps, non-binary categories, or any other such processor-readable data structures known per se in the art.

S102: The video gaming system predicts, based on the received data, a first gameplay event, the first gameplay event comprising an expected future gameplay event.

In some examples of this embodiment, the process of prediction makes use of statistical methods applied to the received data such as extrapolation and probabilistic expectation. Such predictive calculations may be executed by the GPU or game engine of the video gaming system. For example, when the received data comprises user virtual location, the prediction may involve extrapolating their direction of travel; when the received data comprises user input data, the prediction may involve determining the probability of the user utilising a particular keybinding, a particular sequence of command buttons on a controller, or a particular combination of fighting moves for their user avatar, and thereby estimating the probability with which a particular input command is going to occur which is going to affect the on-screen graphics; and when the received data comprises user profile data, the prediction may involve determining the probability with which the user is going to select a certain setting or input a certain input command. This may involve determining the probability that the user will make a certain gameplay decision (resulting in a certain gameplay event and/or gameplay scene which necessarily arises following the user making such a decision); in this case, the user profile data may include one or more indications of or other insights into the user's personality and/or decision-making tendencies e.g. a measure of the user's risk averseness or risk tolerance for certain dangerous in-game plays. In all cases, the video gaming system predicts that a first gameplay event is going to occur based on the data supplied to it and thereafter prepares the shader necessary for the graphics processing tasks that the predicted event would require.

In such examples, the video gaming system may employ a probability threshold wherein the probability threshold represents the minimum likelihood with which a future gameplay event is expected to occur, and thereby setting a minimum bound for when a possible future gameplay event is determined to be an expected future gameplay event.

In other examples, a co-processor-type architecture may be employed. In such an architecture, predictive calculations may be executed or performed by an ML hardware acceleration module configured to be implemented alongside the game engine, wherein the game engine is configured to offload certain processing tasks onto said module. Such tasks typically comprise highly computationally expensive algorithmic execution, such as that associated with ML or Al prediction, and these may be offloaded to the ML hardware acceleration module which is specialised to perform such tasks with greater efficiency than the game engine alone. This provides further advantages in optimising computational resource utilisation for the game engine.

In some examples, the process of prediction makes use of a machine learning model. For example, the predicting, based on the received data, the first gameplay event, may further comprise using the received data as input data into a machine learning model, wherein the machine learning model has been trained and is thereby adapted to predict, based on the input data, the first gameplay event. Such a method involves the following sub-steps:
(i) Gathering a training dataset comprising a diverse range of graphics processing tasks associated with gameplay events and the shaders typically used to address said tasks. Accordingly, each datapoint in the dataset would comprise input features representing past/current gameplay events (e.g. a preceding sequence of gameplay) and characteristics thereof, and the corresponding output label representing the first gameplay event, or a plurality of likely future gameplay events, and characteristics thereof. Such characteristics are represented in gameplay event data. Data could also be continually collected during gameplay to further refine the model and improve predictions. The model could also be trained on player-specific data so that it is possible to learn playing styles of specific players and improve the predictions for a specific user. In alternative examples of the invention, output labels may represent predicted required shaders commonly required following the occurrence of certain past/current gameplay events.
(ii) Identifying the relevant features which describe the different gameplay events and which are to form the input and output labels. These features could include geometric attributes of the scene, texture properties, material properties, lighting parameters, camera settings, and/or other relevant factors. 'Feature engineering' may also involve preprocessing such as normalisation, scaling, or dimensionality reduction to enhance model performance. Feature labels are preferably binary representations quantifying or characterising the aforementioned properties. Alternatively, labels may be represented by non-binary categories named according to said properties. In the aforementioned alternative examples of the invention, it is also necessary to identify the available shaders, said shaders for example represented by their location in memory, file name, or any other shader label whereby individual shaders are identifiable. All shaders usable by the GPU associated with the console or graphics card in question may be included, such as any of the shaders disclosed herein.
(iii) Designing a learning model capable of mapping between the input event features and the output event features (or, alternatively or additionally, output shaders). This could be a neural network-based model such as a convolutional neural network (CNN) or a recurrent neural network (RNN), or alternatively a classic machine learning model such as a decision tree, random forest, or support vector machine (SVM).
(iv) Training the model on the training dataset using a supervised learning technique, during which the model learns to generalise from the input features to predict the first gameplay event for which the appropriate first shader can then be selected to complete the graphics processing tasks required by the first gameplay event. Training may involve adjusting the model parameters iteratively in order to minimise prediction error.
(v) Evaluating the trained model's performance on a validation dataset (often a subset of the training data which has been reserved for validation purposes) to assess accuracy, robustness, and other performance metrics. Evaluation may continue until the model demonstrates satisfactory performance.
(vi) Deploying the model in the inventive method disclosed herein. In this way, given new gameplay event data as inputs, i.e. data characterising past/current gameplay events, the deployed model predicts the most suitable shader for the GPU to use, thereby optimising the rendering process and improving overall efficiency of the video gaming system.

According to these exemplary machine learning models, inputs to the model comprise current or past gameplay events (e.g. a preceding gameplay sequence) and an output of the model comprises a first gameplay event and/or a suitable first shader. It will be understood by the person skilled in the art that other parameters or data may be input to / output from an alternative machine learning model within the scope of the invention disclosed herein. For example, the model considers the events occurring within a certain time period and trains a model to predict the events occurring after this time period, thereby permitting prediction of the required first shader. This may include basing the prediction on the where the user avatar has moved in the preceding 15 seconds, and thereby predicting where they will be in the next 15 seconds; or additionally, providing the sequence of user inputs received within a time period into the model and thereby predicting the events that will occur in a subsequent time period. As such, the method may further comprise any of the other optional implementations described herein.

S103: The video gaming system determines, based on the predicted first gameplay event, a first shader usable by the GPU for processing graphics data associated with the first gameplay event, wherein the first shader is stored in memory usable by the GPU. Different graphics shaders are required for different graphics processing tasks and thereby for different gameplay events. When the video gaming system can predict the event, it may thereby predict the required shader on the basis of the graphics processing tasks which are known to be associated with that event. For example, a metal shader may be required for rendering metal objects in a gameplay event involving said objects, a skin shader may be required for rendering the skin (i.e. clothing, appearance, accessories, stature etc.) of in-game characters in a gameplay event involving said characters, a ground shader may be required for rendering the ground in a particular virtual map in a gameplay event involving said map, a water shader may be required for rendering bodies of water in a gameplay event at sea or along a river, glow shaders may be required for rendering special glow effects in a gameplay event involving luminescent objects, and so on. Different shaders are also required for different post-processing effects such as motion blur, ambient occlusion, depth of field, temporal anti-aliasing, and super-sampling techniques. Certain types of shaders are also used for non-rendering tasks such as animations, for example moving character limbs or performing soft-body deformations.

With knowledge of a gameplay event, such as the player entering a particular region of the virtual environment, or entering a battle, it is possible to determine the shaders required for that event. In particular, gameplay events will require certain associated graphical components to be rendered, such as certain objects, materials, lighting conditions or post processing effects. By predicting the likely future gameplay event, the shaders required for rendering the various graphical components associated with that gameplay event can be determined. Accordingly, different shaders may be loaded for rendering different types of graphical object, material, lighting condition and/or special effect, or for rendering pluralities of said types, required for a given gameplay event.

S104: The video gaming system preloads the first shader for use by the GPU in processing graphics data associated with the predicted first gameplay event. Preloading a shader involves creating a shader object in the graphics API's context and attaching the shader code thereto; the shader program needs to be loaded into the graphics application in some form of memory accessible and usable by the GPU before it may be used by the GPU in rendering tasks associated with gameplay events. Said memory may include VRAM, system RAM, cache memory, or any other memory as described herein.

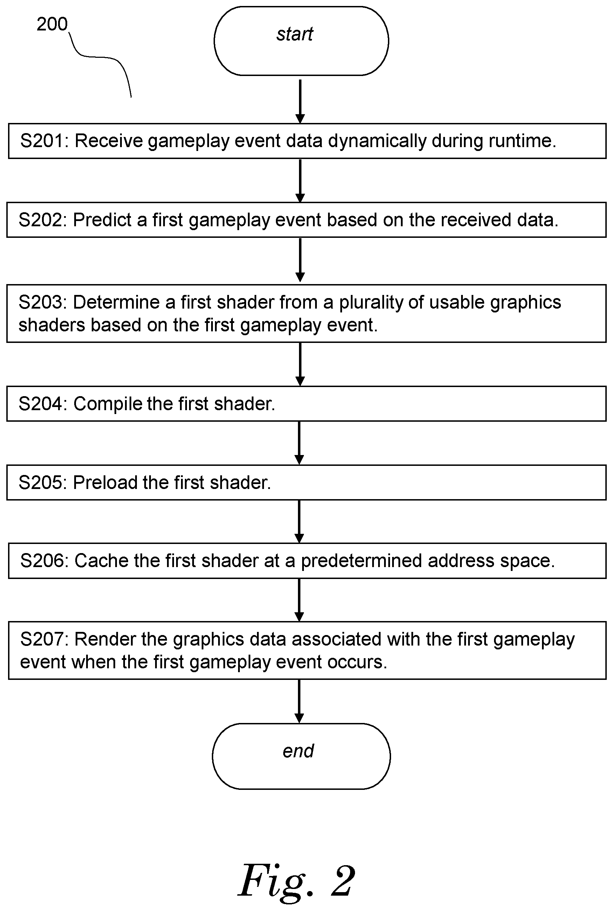

With reference to Fig. 2, there is provided a flow diagram of a method 200 of processing graphics data in a video gaming system according to the invention.

The method 200 of Fig. 2 comprises the steps of: receiving S201 gameplay event data, the gameplay event data comprising data associated with current and/or antecedent gameplay events, wherein the data is received and the subsequent method steps are performed dynamically at runtime of the video game; predicting S202, based on the received data, a first gameplay event, the first gameplay event comprising an expected future gameplay event; determining S203, based on the predicted first gameplay event, a first shader usable by the GPU for processing graphics data associated with the first gameplay event, wherein the first shader is determined from a plurality of usable graphics shaders; compiling S205 the first shader; preloading S205 the first shader into a memory usable by the GPU for processing graphics data associated with the predicted first gameplay event; caching S206 the first shader, wherein the memory usable by the GPU for processing the graphics data associated with the predicted first gameplay event is a cache memory, and wherein the preloaded first shader is stored for use by the GPU within a predetermined address space of the cache memory; and rendering S207 the graphics data associated with the first gameplay event with the preloaded cached first shader.

Each step is now described in sequence. It will be appreciated that some steps of method 200 are substantially the same as steps of method 100; such steps include the step S202 which is substantially the same as step S102, and the step S205 which is substantially the same as step S104. These steps will not be described again. S201: The video gaming system receives gameplay event data and performs the methods disclosed herein at runtime, for example, during gameplay or during initialisation of the video game at startup. The 'runtime' typically refers to the period during which the game is actively running and rendering frames in real-time.

S203: The video gaming system determines the first shader from a plurality of possible graphics shader based on the first gameplay event. There are several types of shader required by the GPU, each responsible for different stages of the rendering pipeline; based on the received data, the GPU is capable of determining the required shader from a set of available shaders of many different types. For example, the plurality of shaders comprises specific forms of vertex shader, geometry shader, a tesselator, a rasteriser, a fragment shader, a pixel shader, and more gameplay event-specific and graphics processing task-specific shaders contemplated by the person skilled in the art. The set of total shaders required for a particular video game will be stored in the game data, in local storage, such as disk storage, or in remote storage from where they can be streamed. The shaders may be stored as shader code ready to be compiled and loaded, or they can be stored pre-compiled and hence only need to be loaded from storage into a memory usable by the GPU for running shader programs. As mentioned, it is important to distinguish between the total number of shaders used within a game that are stored in storage memory (e.g. disk storage or streamed from remote storage) and the shaders that are ready (i.e. loaded) into a memory which is readily accessible / usable by the GPU

S204: In some examples, a video gaming system compiles the first shader during runtime of the video game prior to preloading it. Shader compilation refers to the process of retrieving, parsing and then translating shader source code (e.g. that written in GLSL or HSL) into a format that is executable by the GPU. In the prior art, this typically is done prior to runtime; advantageously, the invention may compile a required shader at runtime where said shader has not already been compiled such that the shader code is executable by the GPU for graphics processing tasks associated with a predicted upcoming event in the video game thereby minimising a latency. Compiling a shader involves checking the syntax and semantics of the shader code (i.e. parsing the shader code) and generating machine code specific to the target hardware (e.g. a specific graphics card) and thereby optimised for execution by the given GPU. This process may be performed by the graphics API (e.g. OpenGL or DirectX) when the shader source code is provided thereto. In other examples, such as where the present method is applied to a video gaming console where shaders are already compiled during the build stage of the console, this step may be omitted.

S206: The video gaming system caches the preloaded first shader in a cache memory for storage and subsequent use in processing graphics data associated with the predicted first gameplay event. This may involve caching the first shader at a predetermined address space/range in order to increase the ease and speed with which it can be accessed for graphics processing tasks and also to permit the GPU to check whether or not a first shader has already been predicted and preloaded, and thereby determine whether or not it must predict a first shader according to the methods described herein based on the presence or absence of a prestored shader.

S207: The video gaming system renders, with the first shader, the graphics data associated with the first gameplay event. Rendering the graphics data involves executing shader code and thereby generating frames comprising the large number and variety of different graphical elements such as different virtual objects, materials, lighting effects, and background scenery such that they may be visually discernible by the user on-screen, via wearable headgear or otherwise in a scene of the video game. Specifically, during runtime, the GPU executes the loaded shader code as part of the graphics rendering pipeline, wherein the GPU invokes GPU-accessible shaders to perform various tasks such as vertex processing, geometry transformation, rasterization, and pixel shading. In this way, the execution of shader code contributes to the generation of visual content, including the rendering of 2D and 3D scenes, application of lighting and materials, and post-processing effects.

There is also provided a further method of processing graphics data in a video gaming system according to the invention.

The method of this embodiment involves extended the methods of other embodiments to predictions involving multiple possible future gameplay events and, optionally, multiple associated graphics shaders. The method comprises predicting, based on the received data, N expected future gameplay events, wherein each of the N events is associated with a likelihood of occurrence, and wherein N is a natural number greater than or equal to 2. Said likelihoods may be stored in a binary matrix representation in GPU- and/or CPU-accessible memory for analysis and further processing by the GPU and/or CPU as described hereafter.

In some examples of this embodiment, the method further comprises determining the first gameplay event from the N events, wherein the first gameplay event comprises an expected future gameplay event having a greatest likelihood of occurrence of the N events. This involves determining a maximum probability of the probabilities determined for several possible future events and thereby determining which of the identified possible future events is most likely (and therefore 'expected') to occur. Such an event is referred to thereafter as a first gameplay event. Accordingly, the method then further comprises determining, based on the predicted first gameplay event, a first shader usable by the GPU for processing graphics data associated with the first gameplay event, and preloading the first shader into a memory usable by the GPU for processing the graphics data associated with the predicted first gameplay event. The method may further comprise any of the other optional implementations described herein. The method may also comprise preloading a plurality of first shaders, said shaders all being predicted to be required for graphics processing tasks associated with the first gameplay event.

In other examples of this embodiment, the method further comprises determining, based on M expected future gameplay events, one or more graphics shaders usable by the GPU for processing graphics data associated with the M events, wherein the M events are the M events of the N events having the M greatest likelihoods of occurrence, and wherein M is a natural number greater than or equal to 1 and less than or equal to N; and preloading the one or more graphics shaders. This involves determining a set of maximum probabilities of the probabilities determined for several possible future events and thereby determining which of the identified possible future events are most likely (and therefore 'expected') to occur. Accordingly, one or several graphics shaders can be prepared and stored for subsequent use by the GPU in graphics processing tasks associated with any or all of the M events. The method may further comprise any of the other optional implementations described herein.

In this way, it is possible to predict a plurality of future events. As mentioned, in an exemplary implementation, this could be achieved using a trained machine learning model which outputs probabilities for a set of possible future events, and the most likely thereof are selected for the determination of shaders to be preloaded. Subsequently, it is then possible to either (a) immediately preload one or more shaders for each of the plurality of future events, or (b) analyse the shaders required across possible future events, determining one or more common shaders required across the plurality of events, and thereby preload the shaders that are required most often for said events. The implementation of (b) may be preferable where each possible future gameplay event is likely to require a range of different graphics shaders and so it is advantageous to determine which shaders are most commonly required across the set of possible events and hence preload those shaders.

With reference to Fig. 3, there is provided a schematic diagram of a video gaming system 1 usable to implement embodiments of the invention.

The video gaming system 1 of Fig. 3 comprises a computer processing unit (CPU or 'game engine') 11 and GPU 12 which may collectively be referred to as the processor. The video gaming system further comprises various instances of computer-readable storage media. The video gaming system may comprise a data port and an audio/visual (A/V) port, and may be connectable to a controller 2 whereby the user interacts with the video game by providing inputs thereto via the controller 2 and data port connection.

The computer-readable storage media may include, but is not limited to: random access memory (RAM) 13, optical drive 14, and solid state drive (SSD) 15. Of the various instances of computer-readable storage media, some may be memory directly accessible and usable by the GPU 12 and/or CPU 11 such as the VRAM 13, others may be only indirectly accessible thereby e.g. via the data port shown, and others may be inaccessible. The RAM 13 may be VRAM, system RAM or the like. The SSD 15 may alternatively be a hard disk drive (HDD). Some of said media may be provided on a graphics card itself and some may be provided by other PC or console hardware. The computer-readable storage media is configured to store the various forms of graphics and shader program related data as described hitherto and may be further configured to store instructions which when executed cause the processor to execute any of the implementations described hitherto.

As in a conventional rendering pipeline, based on the current game state, the CPU 11 generates rendering commands such as draw calls and state changes to send to the GPU 12. These commands specify how objects should be rendered including their position, orientation textures, shades, and other rendering attributes. The GPU 12 executes these rendering commands received from the CPU 11 to generate the final visual content displayed on the screen after being output as image or video frames via the A/V port. The rendering pipeline may comprise multiple stages such as vertex processing, primitive assembly, rasterisation, fragment shading, frame buffering and output merging. The data transfer between CPU 11 and GPU 12 may be managed via APIs with the CPU 11 sending rendering commands and the GPU 12 sending back the rendered frames to be displayed and output by the A/V port.

The methods described hitherto may be implemented by hardware, software, or a combination thereof. Where a software implementation is employed to implement an example of the invention or any feature therein, it will be appreciated that such software, and any computer programs and non-transitory computer-readable storage media by which such software is provided, are also to be considered embodiments of the invention.

The foregoing descriptions are mere examples of the invention and are not intended to limit the protection scope of the invention. Any variation, replacement or other embodiment readily contemplated by a person skilled in the art within the scope of the claims appended hereto shall fall within the protection scope of the application.

## Claims

1. A computer-implemented method of processing graphics data in a video gaming system, the video gaming system comprising a graphics processing unit (GPU), and the method comprising:
receiving gameplay event data, the gameplay event data comprising data associated with current and/or antecedent gameplay events;
predicting, based on the received data, a first gameplay event, the first gameplay event comprising an expected future gameplay event;
determining, based on the predicted first gameplay event, a first shader usable by the GPU for processing graphics data associated with the first gameplay event; and
preloading the first shader into a memory usable by the GPU for processing the graphics data associated with the predicted first gameplay event.

2. The method according to claim 1, wherein, after determining the first shader usable for processing graphics data associated with the first gameplay event, the method further comprises:
performing a check to determine whether the first shader is present in the memory usable by the GPU; and
preloading the first shader when it is determined that the first shader is not present in the memory usable by the GPU.

3. The method according to claim 1 or claim 2, wherein, before the preloading the first shader, the method further comprises compiling the first shader, and wherein the method further comprises:
rendering, with the first shader, the graphics data associated with the first gameplay event.

4. The method according to any preceding claim, wherein the gameplay event data further comprises user virtual location data, the user virtual location data comprising data associated with a location of a user in a virtual gaming environment, and wherein the predicting, based on the received data, the first gameplay event, further comprises:
predicting a future location of the user in the virtual gaming environment.

5. The method according to any preceding claim, wherein the gameplay event data further comprises user input data, the user input data comprising data associated with input commands received from a user input device, and/or the gameplay event data further comprises user profile data, the user profile data comprising data associated with player behaviour characteristics of the user, and wherein the predicting, based on the received data, the first gameplay event, further comprises:
predicting a future input command from the user and/or a future gameplay decision of the user; and
determining the first gameplay event based on the predicted future input command and/or the predicted future gameplay decision respectively.

6. The method according to any preceding claim, wherein the determining, based on the predicted first gameplay event, the first shader, further comprises:
determining the first shader from a plurality of graphics shaders.

7. The method according to any preceding claim, the method further comprising:
calculating, based on the received data, a likelihood of occurrence of N possible future gameplay events; and
determining the first gameplay event as the gameplay event having a greatest likelihood of occurrence of the N gameplay events.

8. The method according to claim 7, wherein the method comprises:
determining a plurality of gameplay events based on the calculated likelihoods of occurrence within the N gameplay events;
determining a plurality of shaders required for processing graphics data associated with the plurality of gameplay events;
preloading the plurality of shaders; and
determining one or more common shaders required across the plurality of gameplay events.

9. The method according to claim 8, wherein determining a plurality of gameplay events comprises determining a plurality of gameplay events having a calculated likelihood above a threshold.

10. The method according to any preceding claim, wherein the predicting, based on the received data, the first gameplay event, is performed by a hardware acceleration module, and the method further comprises:
using the received data as input into a trained machine learning model, wherein the machine learning model is trained to predict, based on the input data, an expected future gameplay event, the machine learning model being trained using training data captured during gameplay.

11. The method according to any preceding claim, wherein the first shader is preloaded into a cache memory usable by the GPU, and wherein the preloaded first shader is stored for use by the GPU within a predetermined address space of the cache memory.

12. The method according to any preceding claim, wherein the method is performed at runtime during gameplay.

13. A non-transitory computer-readable storage medium comprising instructions that when executed by a processor cause the processor to perform the method according to any of claims 1 to 12.

14. A computer program comprising instructions that when executed by a processor cause the processor to perform the method according to any of claims 1 to 12.

15. A video gaming system comprising a processor configured to perform the method according to any of claims 1 to 12.
